# EUROPEAN PATENT APPLICATION

(11) **EP 1 415 714 A1**
(43) Date of publication of application: **06.05.2004**
(21) Application number: 03256257.1
(22) Date of filing: 03.10.2003
(51) Int. Cl.: B01L 3/00, B01J 19/00, G01N 33/53, C12M 1/34

(54) **Apparatus and method for performing an assay**

(30) Priority: 29.10.2002 GB 0225135
(71) Applicant: Micro Chemical Systems Limited, Hull HU1 4BG (GB)
(72) Inventor: Greenwood, Paul Andrew, Beverley East Riding Hull HU17 9UN (GB); Skelton, Victoria, Hull East Yorkshire HU5 3SG (GB); Haswell, Stephen John, Cottingham East Yorkshire HU16 4RL (GB); Parkin, Nigel, Goole East Riding Yorkshire DN14 7XE (GB); Greenway, Gillian Mary, Brough East Riding Yorkshire HU15 2AJ (GB)
(74) Representative: Hartley, Andrew Philip

(57) **Abstract**

A micro-reactor (10) is formed from a first glass block (11) having first and second grooves (14,17) formed in an upper surface (13) and a second glass block (12) having a lower surface (26) that closes the first groove (14) and parts of the second groove (17) to form corresponding channels. An aperture (31) extends through the second block (12) to a part of the upper surface (13) of the first block (11). This part (called the inner surface 32) has a number of parts (called the inner surface grooves) of the second groove (17) formed in it. The inner surface grooves can be closed by an end surface of a cylindrical insert (37) to form corresponding channel parts. A first chemical species can be bound to the end surface of the cylindrical insert (37) so that the first chemical species lies within the channel parts corresponding to the inner surface grooves. A second chemical species can now be passed through the channels of the micro-reactor for binding between the first and second chemical species. By using suitable labels the amount of binding in the channels can be determined.

## Description

The invention relates to an apparatus and to a method for performing an assay.

Such assays, for example immunoassays, are commonly performed in micro-titre plates. However, this suffers from a number of disadvantages.

According to a first aspect of the invention, there is provided an apparatus for performing an assay involving binding between two chemical species comprising, first and second bodies that are releasably fixable together and that together define at least one channel when so fixed, the second body having a surface to which a first chemical species is bound so that the first chemical species lies in the at least one channel, the apparatus being adapted for passage through the at least one channel of a fluid containing a second chemical species for binding between the first and second chemical species in the at least one channel.

According to a second aspect of the invention, there is provided an apparatus for performing an assay involving binding between two chemical species, comprising, a first body having at least one groove formed therein, a second body having a surface that closes the at least one groove to form at least one channel, and a first chemical species bound so as to lie within the at least one channel, the apparatus being adapted for passage through the at least one channel of a fluid containing a second chemical species for binding between the first and second chemical species in the at least one channel.

According to a third aspect of the invention, there is provided a method of performing an assay involving binding between two chemical species comprising, providing an apparatus according to the first or second aspects of the invention, introducing a sample containing a second chemical species into the at least one channel for binding between the first and second chemical species, and determining an amount of the second chemical species from the sample bound to the first chemical species in the at least one channel.

According to a fourth aspect of the invention, there is provided an apparatus comprising, first and second bodies, the first body having an aperture therein, the aperture leading to an inner surface of the first body, the inner surface having at least one groove formed therein, the second body having a surface, the first and second bodies being releasably fixable together with at least part of the second body fitting within the aperture so that the surface of the second body seals against the inner surface of the first body and closes the at least one groove to form at least one channel, the apparatus comprising an inlet and an outlet connected by a flowpath, the flowpath comprising the at least one channel.

According to a fifth aspect of the invention, there is provided a method of performing an assay involving binding between two chemical species, comprising, providing a channel having a first chemical species bound therein, introducing a sample containing a second chemical species into the channel for binding between the first and second chemical species, determining an amount of the second chemical species from the sample bound to the first chemical species within the channel by using a chemiluminescence detector to detect chemiluminescence within the channel.

According to a sixth aspect of the invention, there is provided an apparatus comprising, a first body having at least one groove formed therein, a second body having a surface that closes the at least one groove to form at least one channel, and a chemiluminescence detector positioned for detecting chemiluminescence in the at least one channel.

According to a seventh aspect of the invention, there is provided a method of performing an assay involving binding between two chemical species comprising, providing an apparatus comprising a first body having at least one groove formed therein and a second body having a surface that closes the at least one groove to form at least one channel, providing together in the at least one channel first and second chemical species capable of binding together, and determining a measure of binding undergone between the first and second chemical species.

The following is a more detailed description of embodiments of the invention, by way of example, reference being made to the appended schematic drawings in which:
Figure 1 is a perspective view of a micro-reactor;
Figure 2 is a perspective view of an upper block used to make the micro-reaction of Figure 1;
Figure 3 is a perspective view of a lower block used to make the micro-reactor of Figure 1;
Figure 4 shows an apparatus used to make inserts for the micro-reactor of Figure 1;
Figures 5 and 6 show the micro-reactor of Figure 1 together with other components of an apparatus in accordance with the invention; and
Figure 7 is a cross-sectional view of the micro-reactor and an insert insertable into the micro-reactor.

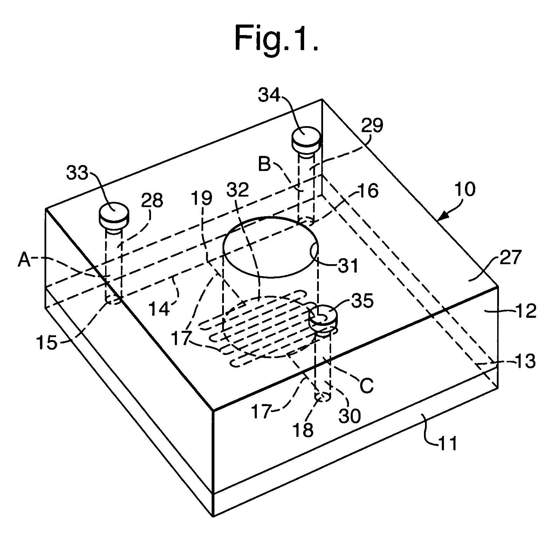

Referring first to Figures 1 to 3, the micro-reactor 10 comprises a lower block 11 and an upper block 12. The lower block 11 and the upper block 12 are both formed from borosilicate glass.

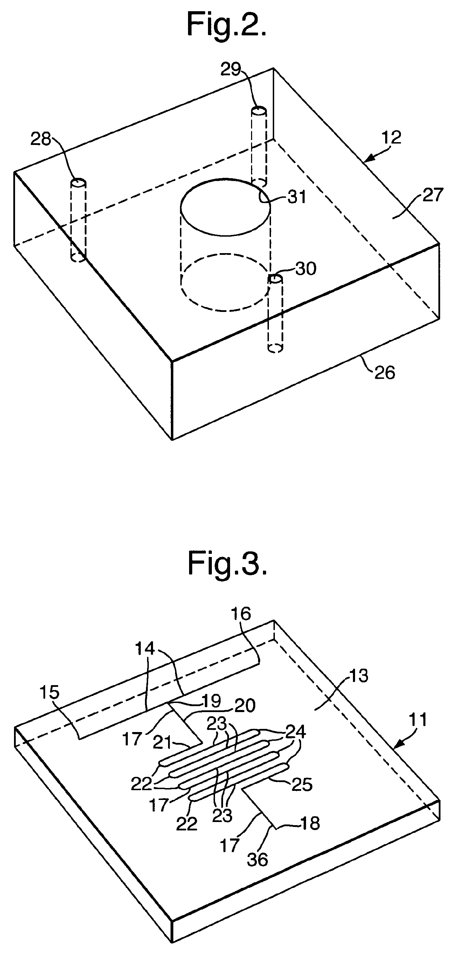

As best seen in Figure 3, the lower block 11 has an upper planar surface 13. The upper planar surface 13 of the lower block 11 is polished to a high degree of smoothness. A first groove 14 is formed in the upper planar surface 13 of the lower glass block 11 and extends in a straight line between first and second ends 15,16. A second groove 17, also formed in the upper planar surface 13 of the lower block 11, extends from a mid-point of the first groove 14 to a free end 18 of the second groove 17. The second groove 17 joins the first groove 14 at a junction 19.

Starting from the junction 19, the second groove 17 has a first portion 20 which extends perpendicularly to the first groove 14. Following from the first portion 20, the second groove 17 turns through 90° to the right, into a first shorter transverse portion 21. The second groove 17 then turns through 180°, at a left hand curve portion 22, into a longer transverse portion 23. After the longer transverse portion 23, the second groove 17 turns through 180° at a right hand curve portion 24 into a second longer transverse portion 23. The second groove 17 then continues in this way, with alternating left and right hand curve portions 22,24 connecting longer transverse portions 23. At the end of the final longer transverse portion 23, the second groove 27 turns through 180° at a right hand curve portion 24 into a second shorter transverse portion 25. After the second shorter transverse portion 25, the second groove 17 turns through 90° into a final portion 36 which extends to the free end 18. In total, there are seven longer transverse portions 23, each extending parallel to the other longer transverse portions 23 and also parallel to the first groove 14.

The first groove 14, and all the portions of the second groove 17, have a width of about 100 µm and a depth of about 30 µm. The grooves 14,17 may be made by any known process, for example, by photolithography followed by wet etching.

As best seen in Figure 2, the upper glass block 12 has opposed, planar lower and upper surfaces 26,27. First, second and third cylindrical holes 28,29,30 extend between the lower and upper surfaces 26,27. A central cylindrical aperture 31, having a larger diameter than the first, second and third cylindrical holes 28,29,30, extends between the lower and upper surfaces 26,27 of the upper glass block 12. The circumferential surface of the large central aperture 31 is polished to a high degree of smoothness.

In order to form the micro-reactor 10 (see Figure 1), the lower surface 26 of the upper glass block 12 is bonded to the upper surface 13 of the lower glass block 11. The surfaces 26,13 may be, for example, bonded together by thermal bonding in a known manner.

When the lower and upper glass blocks 11,12 are bonded together, the first cylindrical hole 28 lies over the first end 15 of the first groove 14, and forms a first reservoir A. The second cylindrical hole 29 lies over the second end 16 of the first groove 14, and forms a second reservoir B. The third cylindrical hole 30 lies over the free end 18 of the second groove 17 and forms a third reservoir C.

The large central aperture 31 extends inwardly to a circular portion of the upper surface 13 of the lower glass block 11. This circular portion is referred to as the inner surface 32 of the micro-reactor 10.

As seen in Figure 1 (and referring to the reference numerals shown in Figure 3), the inner surface 32 contains a part of the first portion 20 of the second groove 17 and a part of the first shorter transverse portion 21. Additionally, the inner surface 32 contains central parts of the seven longer transverse portions 23. Further, the inner surface 32 contains part of the second shorter transverse portion 25 and part of the final portion 36. As seen in Figure 1, the right and left hand curve portions 22,24 of the second groove 17 do not lie on the inner surface 32, but lie on the region of the upper planar surface 13 that is bonded to the lower planar surface 26. The parts of the second groove 17 that lie on the inner surface 32 will be referred to as the inner surface grooves.

As best seen in Figure 1, the lower surface 26 of the upper glass block 12 closes the first groove 14 to form a corresponding channel. Similarly, all those parts of the second groove 17 that do not lie on the inner surface 32 are closed by the lower surface 26 of the upper glass block 12 to form corresponding channel portions.

As shown in Figure 1, each one of the first, second and third reservoirs, A,B,C is provided with a respective one of first, second and third fittings 33,34,35 which close the reservoirs A,B,C at the upper surface 27 of the upper glass block 12. The first, second and third fittings 33,34,35 are formed from machinable glass ceramic, and each fitting 33,34,35 is thermally bonded into the top of the respective reservoir A,B,C. Each one of the fittings 33,34,35 has a hole (not shown) extending therethrough, the hole being provided with a screw thread. This allows a respective externally threaded tubular connector (not shown) to be screwed into each fitting 33,34,35 so as to communicate with the respective reservoir A,B,C located under the fitting 33,34,35. The tubular connectors are used for connecting flexible lengths of tubing to the micro-reactor 10.

The whole outer surface of the micro-reactor 10, other than a small circular section corresponding in size to and lying immediately below the circular inner surface 32, is covered with matt black paint.

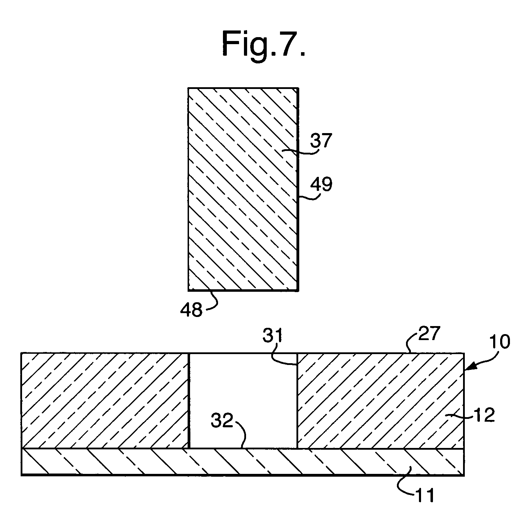

The micro-reactor 10 is used in conjunction with a cylindrical insert 37 (see Figure 7) which inserts into the large central aperture 31. The cylindrical insert 37 has a diameter that precisely matches the diameter of the large central aperture 31 so that the insert fits tightly in the central aperture 31. The axial length of the cylindrical insert 37 may be about 20mm, compared to an axial length of about 10mm for the large central aperature 31.

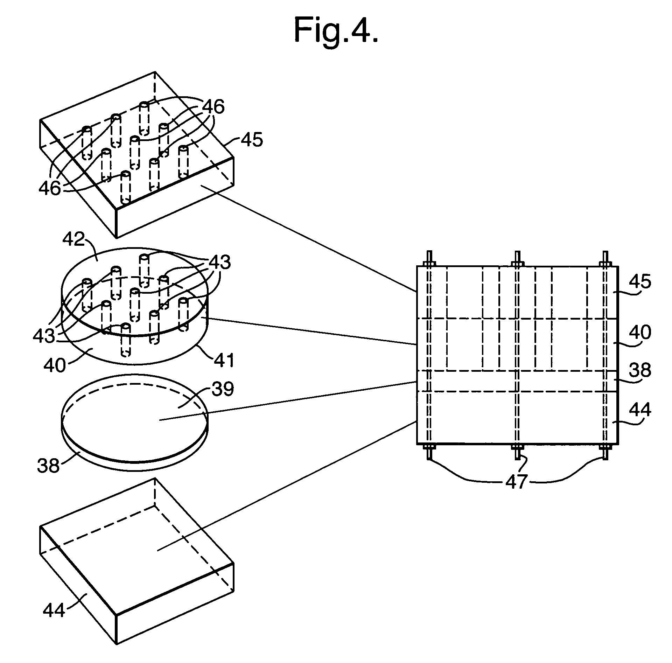

Cylindrical inserts 37 may be prepared, nine at a time, in the apparatus shown in Figure 4. The insert preparing apparatus comprises a lower glass block 38 which has an upper planar surface 39 polished to a high degree of smoothness. The apparatus also comprises an upper glass block 40 having lower and upper planar surfaces 41,42. Nine identical cylindrical holes 43, having a diameter identical to the diameter of the large central aperture 31 of the micro-reactor 10, extend between the lower and upper surfaces 41,42 of the upper glass block 40. The insert preparing apparatus also comprises a lower Perspex block 44 and an upper Perspex block 45. The upper Perspex block 45 also has nine cylindrical holes 46 extending through it. In order to assemble the insert preparing apparatus, the lower glass block 38 is placed on the lower Perspex block 44 with the polished planar surface 39 of the lower glass block 38 upwards. The upper glass block 40 is then placed with its lower surface 41 on the polished surface 39 of the lower glass block 38. Hence, the cylindrical holes 43 in the upper glass block 40 are closed, at their bottom ends, by the polished planar surface 39 of the lower glass block 38. The upper Perspex block 45 is then placed over the upper glass block 40 so that the cylindrical holes 46 in the upper Perspex block 45, which have the same diameter as the cylindrical holes 43 of the upper glass block 40, align with respective ones of the cylindrical holes 43 in the upper glass block 40. Finally, the apparatus is held together by tie rods 47 passing through the upper and lower Perspex blocks 44,45.

The circumferential surfaces of the cylindrical holes 43 of the upper glass block 40 are also polished to a high degree of smoothness.

Hence, each hole 43 in the upper glass block 40, together with the associated one of the holes 46 in the upper Perspex block 45, and the underlying portion of the upper surface 39 of the lower glass block 38, forms a mould.

The cylindrical inserts 37 are formed from polydimethylsiloxane (PDMS). In order to form the cylindrical inserts 37, a mixture of Sylgard 184 silicone elastomer base and curing agent is poured into each one of the moulds in the cylindrical insert forming apparatus. The elastomer cures to form the cylindrical inserts 37, which can then be removed by dismantling the insert forming apparatus.

As the polished planar surface 39 of the lower glass block 38 formed the end surfaces of the nine moulds, each one of the nine cylindrical inserts 37 will have a smooth end surface 48. Additionally, a portion of the circumferential surface 49 of each cylindrical insert 37, extending from the smooth end surface 48 for about 10mm (corresponding to the depth of the holes 43 in the upper glass block 40) is also smooth.

An insert 37 can be inserted into the large central aperture 31 of the micro-reactor 10. The insert 37 is inserted with the smooth end surface 48 lowermost. The smooth end surface 48 of the insert 37 seals against the inner surface 32 of the micro-reactor 10 and closes the inner surface grooves to form corresponding channel parts. Additionally, the smooth portion of the circumferential surface 49 of the insert 37 (extending from the smooth end surface) seals against the circumferential surface of the large central aperture 31.

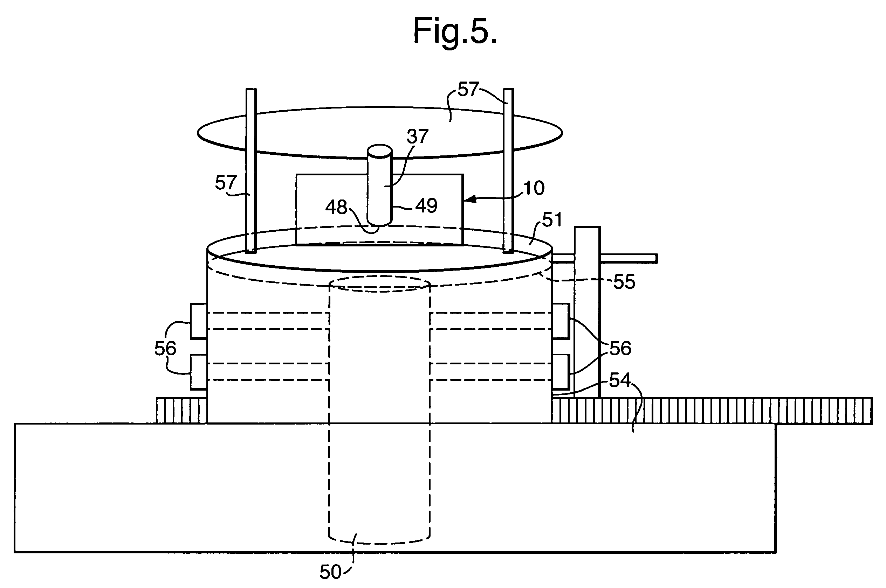

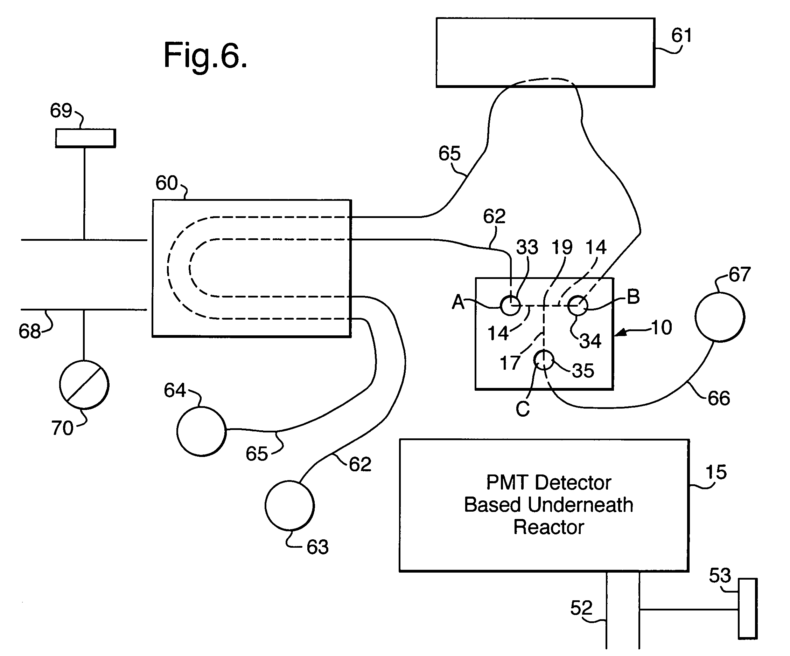

The micro-reactor 10 and a cylindrical insert 37 are mountable on the apparatus shown in Figure 5. The apparatus shown in Figure 5 comprises a photon multiplier tube 50 and a shutter 51. The photon multiplier tube 50 is of a type having a relatively low operating voltage between about 12 V to 15 V. As shown in Figure 6, the photon multiplier tube 50 is connected to a 12 V battery 52 via an on/off switch 53. The photon multiplier tube 50 is housed in a light tight housing 54 which has an upper opening 55. The photon multiplier tube 50 is secured and positionable within the light tight housing 54 by adjusting screws 56.

A suitable photon multiplier tube 50 is sold by Hamamatsu (UK) under part number H5784-00.

The shutter 51 lies over the upper opening 56 of the light tight housing 54. The shutter 51 is of a type known as a zero aperture diaphragm iris. The shutter 51 can be closed so as to prevent light reaching the photon multiplier tube 50.

As seen in Figure 5, the micro-reactor 10 can be mounted over the shutter 51 so that the inner surface 32 lies directly over the shutter 51 and directly over the photon multiplier tube 50. The distance between the inner surface 32 and the photon multiplier tube should be as short as possible, and may be in the region of 6mm. As seen in Figure 5, a clamping mechanism 57 is provided to clamp a cylindrical insert 37 in the large central aperture 31, as described above, and also to clamp the micro-reactor 10 with the insert 37 in position above the shutter 51.

Referring now to Figure 6, the apparatus also comprises a peristaltic pump 60 and a micro sample injector 61. (It should be noted that the micro-reactor 10 is shown in a simplified manner in Figure 6.)

The peristaltic pump 60 is of a miniaturised type, such as that provided by Camlab under part number IL/P625/275. The micro sample injector 61 is fitted with a 0.2 µl sample rotor.

A first length of tubing 62 is connected to the first reservoir A of the micro-reactor 10 using a tubular connector (not shown) that screws into the first fitting 33 of the micro-reactor 10, as described above. The first length of tubing 62 is passed through the peristaltic pump 60 to a standard solution reservoir 63. A second length of tubing 65 is connected to the second reservoir B of the micro-reactor 10, using a tubular connector (not shown) which screws into the second fitting 34 of the micro-reactor 10. The second length of tubing 65 is connected to the micro sample injector 61, and passes through the peristaltic pump 60 to a buffer reservoir 64. A third length of tubing 66 is connected to the third reservoir C of the micro-reactor 10. The third length of tubing 66 passes to a waste reservoir 67.

The peristaltic pump 60 is connected to a battery 68 via an on/off switch 69 and via a potentiometer 70. The speed of the peristaltic pump 60 can be adjusted by adjusting the potentiometer 70. This allows liquid flow in each of the first and second lengths of tubing 62,65 to be varied, from about 0.008 ml. per minute to about 7.3 ml. per minute.

The apparatus described above, other than the micro sample injector 61, is located within a light tight box (not shown), and can be operated within the light tight box when the light tight box is closed. Moreover, due to the small and light nature of the components of the apparatus, the apparatus when assembled and contained within the light tight box is readily portable. The micro sample injector 61 is mounted on a surface of the light tight box.

The apparatus described above may be used to perform an assay, for example an immunoassay, as described below. The immunoassay described below is simply intended as an example, indicative of the type of assays that may be performed using the apparatus described above. In this example, 3,3',5-triiodo-L-thyronine was used as an antigen and anti-3,3',5-triiodo-L-thyronine was used as an antibody.

The first step in the assay is to bind the antibody to the smooth end surface 48 of a cylindrical insert 37. This is done using a binding micro-reactor (not shown) identical to the micro-reactor 10 described above, but without the matt black paint on the outer surface. The antibody is attached to the smooth end surface 48 of the cylindrical insert 37 using a micro-contact printing technique which delivers antibody as a self-assembled monolayer onto a substrate. The micro-contact printing technique is described in Kumar et al, Appl. Phys. Lett., (1993), 63, 2002. Explanation is also provided in Larsen et al, J. Am. Chem. Soc., (1997), 119, 3017.

The following is a brief explanation of the attachment of the antibody to the smooth end surface 48 of the cylindrical insert 37 using the binding micro-reactor (not shown). In order to aid understanding, the parts of the binding micro-reactor will be given the same names and reference numerals as the corresponding parts of the micro-reactor 10 described above. Firstly, a cylindrical insert 37 is inserted into the large central aperture 31 of the binding micro-reactor (not shown) so that the smooth end surface 48 of the insert 37 contacts and seals against the inner surface 32 of the binding micro-reactor. As discussed above, the smooth end surface 48 of the cylindrical insert 37 closes the inner surface grooves of the binding micro-reactor to form corresponding channel parts. The second reservoir B of the binding micro-reactor is then sealed.

A solution of the antibody is then introduced into the first reservoir A of the binding micro-reactor. The antibody solution passes along the channel formed from the first groove 14 to the junction 19. As will be appreciated from the above, the second groove 17 is now entirely closed, and forms a continuous serpentine channel leading from the junction 19 to the third reservoir C. The antibody solution passes from the junction 19 along the channel formed by the second groove 17 to the third reservoir C. Hence, importantly, the antibody solution passes through the channel parts that are formed by the inner surface grooves in combination with the smooth end surface 48 of the cylindrical insert 37. As the antibody solution passes through these channel parts, the antibody adheres to the smooth end surface 48 of the cylindrical insert 37 by physical absorption. As will be appreciated, as the smooth end surface 48 of the cylindrical insert 37 seals against the inner surface 32 of the binding micro-reactor, only those portions of the smooth end surface 48 that lie directly above the inner surface grooves have antibody bound thereto.

Adhesion of the antibody to the smooth end surface 48 of the cylindrical insert 37 can be enhanced by treating the cylindrical insert 37 in a low temperature plasma cleaner before attaching the antibody.

The cylindrical insert 37, having the antibody bound thereto, is then removed from the binding micro-reactor.

The cylindrical insert 37 having the antibody bound thereto is then inserted into the large central aperture 31 of the micro-reactor 10 described above and shown in Figures 1 to 3, so that the smooth end surface 48 of the cylindrical insert 37 seals against the inner surface 32 of the micro-reactor 10 and closes the inner surface grooves to form corresponding channel parts. The cylindrical insert 37 is aligned within the large central aperture 31 so that those portions of the smooth end surface 48 of the cylindrical insert 37 to which antibody is bound lie over the inner surface grooves of the micro-reactor 10. This ensures that the bound antibody lies in the channel parts formed by the inner surface grooves and the smooth end surface 48 of the insert 37. The cylindrical insert 37 is then clamped into the micro-reactor 10, and the micro-reactor 10 together with the insert 37 clamped over the shutter 51 using the clamping mechanism 57. At this stage, the shutter 51 is shut and the photo multiplier tube is turned off.

Next, a standard solution of the antigen (3,3',5-triiodo-L-thyronine) is prepared with a chemiluminescent label attached to the antigen. Any suitable chemiluminescent label may be used, such as acridinium ester, Tris(2,2'-bipyridyl)ruthenium, luminol, or HRP. The standard labelled antigen solution (which has a known concentration of labelled antigen) is placed in the standard solution reservoir 63. A buffer is placed in the buffer reservoir 64. The peristaltic pump 60 is then operated so that the standard labelled antigen solution passes through the first tubing 62 towards the first reservoir A of the micro-reactor 10. Simultaneously, the buffer passes through the second length of tubing 65 towards the second reservoir B of the micro-reactor 10. When the buffer reaches the sample injector 61, a sample containing an unknown quantity of the antigen (3,3',5-triiodo-L-thyronine) is injected, using the micro sample injector 61, into the buffer in the second length of tubing 65. The sample volume is 0.2 µl.

Then, simultaneously, the standard labelled antigen solution reaches the first reservoir A and and the buffer carrying the sample reaches the second reservoir B. From the first reservoir A of the micro-reactor 10, the standard labelled antigen solution passes along the channel formed by the first groove 14 to the junction 19. Simultaneously, the buffer carrying the sample passes from the second reservoir B along the channel formed by the first groove 14 to the junction 19. At the junction 19, the standard labelled antigen solution, and the buffer carrying the sample, mix together and pass together down the channel formed by the second groove 17 towards the third reservoir C.

As will be appreciated from the above, the sample, containing the unknown amount of the antigen, and diluted by a known ratio in the buffer, is mixed at the junction 19 with the standard labelled antigen solution. As the flow rates through the first and second lengths of tubing 62,65 are the same, the sample/buffer mix is mixed at a ratio of 50:50 with the standard labelled antigen solution. When this mixture of sample/buffer and standard labelled antigen solution lies within the channel formed by the second groove 17, the peristaltic pump is stopped.

As will be appreciated from the above, both the antigen in the sample, and also the labelled antigen from the standard labelled antigen solution, now lie within the channel parts formed between the inner surface grooves and the smooth end surface 48 of the cylindrical insert 37. Accordingly, both antigen from the sample, and also labelled antigen, can come into contact with the antibody bound to the smooth end surface 48 of the cylindrical insert 37.

During the time that the peristaltic pump 60 is switched off, antigen from the sample, and labelled antigen compete to bind with the antibody bound to the smooth end surface 48 of the cylindrical insert 37. The more antigen that was contained in the sample, the less labelled antigen will bind to the antibody. Conversely, the less antigen contained in the unknown sample, the more labelled antigen will bind to the antibody.

The mixture of the sample and the standard labelled antigen solution is left in the channel formed by the second groove 17 until reaction between the antigen from the sample, the labelled antigen, and the antibody has reached equilibrium. This may take about five minutes. After equilibrium has been reached, the first and second lengths of tubing 62,65 are placed in a container containing a wash buffer and the peristaltic pump 60 is started so as to wash the wash buffer through the channels of the micro-reactor 10, so as to remove unbound antigen and unbound labelled antigen.

A trigger solution is then passed through the channels of the micro-reactor 10. The trigger solution triggers the label bound to the labelled antigen to undergo chemiluminescence. Hence, the chemiluminescence will occur in those channel parts formed between the inner surface grooves and the smooth end surface of the cylindrical insert 37. The shutter 51 is opened and the photo multiplier tube 50 is operated to measure this chemiluminescence. As the amount of labelled antigen bound to the antibody is inversely related to the amount of antigen in the sample, the amount of chemiluminescence measured will also be inversely related to the amount of antigen in the sample, and so the concentration of antigen in the sample can be determined.

The apparatus and the method described above result in the achievement of a large number of advantages.

Firstly, the fact that the binding between the antibody and the antigen (and labelled antigen) takes place in channels having small cross-sectional dimensions (100 µm wide x 30 µm deep), results in the binding occurring considerably more rapidly than antigen/antibody binding in conventional immunoassays. This is because the diffusion distances in the channels are small. Hence, the channels in which antibody/antigen binding occurs should be as small as possible, consistent with achieving a sufficient flow rate. Preferably, the channels in which the antigen/antibody binding occurs have a maximum cross-sectional dimension no more than about 500 µm. More preferably, the maximum cross-sectional dimension is no more than about 300 µm. Even more preferably, the maximum cross-sectional dimension is no more than about 200 µm.

Secondly, the concentration of the antibody/antigen complex increases very rapidly as the reaction progresses and no dilution occurs because the channel thickness is within the range of the diffusion layer. This is not the case for micro titre plates where the product after the reaction of the surface may be transported out of the diffusion layer into the bulk solution.

Thirdly, the serpentine shape of the second groove 17 has the result of providing several parallel channel parts between the inner surface grooves and the smooth end surface of the cylindrical insert 37. These parallel channel parts are the parts in which the antibody/antigen binding takes place, and the parts in which chemiluminescence occurs. The provision of a number of channel parts, side by side (preferably parallel), has the effect of "concentrating" the chemiluminescence occurring in the relatively small area of the inner surface 32 of the micro-reactor 10. This facilitates accurate measurement of the chemiluminescence.

Fourthly, the relatively small volumes of the channels of the micro-reactor 10, mean that only a small volume of sample is required for the assay.

Fifthly, as the apparatus, as a whole, is relatively small, light and portable, it can be used, for example, to perform assays at the source of a sample, rather than in a central laboratory. For example, the apparatus may be used to perform clinical tests at a patient's bedside, instead of having to perform an assay on a clinical sample in a central hospital laboratory. Additionally, as the apparatus can perform assays very rapidly, as discussed above, it is possible, for example, to monitor a metabolite of a patient, by performing repeated assays for the metabolite in the apparatus. This might be useful for monitoring a metabolite during the course of, for example, an operation. The apparatus can be used other than for medical uses. For example, it can be used to measure chemical species (e.g. undesirable species) in the environment.

It is anticipated that the apparatus may be adapted for use by an unskilled technician - the apparatus being operated automatically, or semi-automatically.

It will be appreciated that the apparatus and the method may be adapted in many respects, without departing from the invention as defined in the claims.

For example, a cylindrical insert 37 may be supplied with an antibody already coated on the smooth end surface 48.

Instead of binding the antibody to the smooth end surface 48 of the cylindrical insert 37, an antigen could be bound to the smooth end surface 48. The apparatus may then be used to assay an unknown amount of antibody in a sample, the antibody binding to the antigen bound to the smooth end surface 48.

The configuration of the micro-reactor 10, in particular the configuration of the channels and the reservoirs, may be adapted to any required suitable configuration.

Instead of the micro-reactor 10, a disposable micro-reactor may be used. In this case, the disposable micro-reactor may comprise a first block provided with a number of grooves, and a second block having a surface coated with, for example, an antigen or an antibody. The surface of the second block may be permanently bound to the first block, so as to close the grooves to form the required channels. The pre-coated surface of the second block would provide the antigen or the antibody within the channels of the disposable micro-reactor.

The invention is not limited to assays involving binding of antigen and antibody. Any assays involving binding of two chemical species may be performed - with one of the chemical species being bound within the channels of the micro-reactor. Preferably, the two chemical species will be a protein and a ligand for the protein.

In the apparatus described above, the channels are formed by grooves formed in one body and by a closing surface of a second body. This is particularly advantageous, as it allows for the cheap and easy preparation of a micro-reactor having interconnecting channels. Moreoever, the channels can have a complex configuration (unlike, for example channels formed by drilling). However, the channels need not be formed in this way and may be formed in any other manner, such as by drilling through a block.

The apparatus may be used to perform several different assays, either simultaneously or sequentially, using a single micro-reactor.

The micro-reactor 10 could alternatively be formed from other types of glass, from plastics, polymers, or a mixture of these materials.

The inserts 37 can be any suitable shape, with the central aperture 31 having a corresponding shape allowing an insert to insert into the aperture and seal the inner surface grooves. The inserts preferably have a shape that matches that of the detection window of the photon multiplier tube.

The invention also encompasses binding together of first and second chemical species in a channel of a micro-reactor when neither of the chemical species is immobilised within the micro-reactor. In this case, electrophoresis could be used to separate bound chemical species from unbound chemical species, so as to allow quantitation of the binding.

## Claims

1. An apparatus for performing an assay involving binding between two chemical species comprising, first and second bodies that are releasably fixable together and that together define at least one channel when so fixed, the second body having a surface to which a first chemical species is bound so that the first chemical species lies in the at least one channel, the apparatus being adapted for passage through the at least one channel of a fluid containing a second chemical species for binding between the first and second chemical species in the at least one channel.

2. An apparatus according to claim 1, wherein the first body has a surface having at least one groove formed therein, the surface of the second body sealing against the surface of the first body and closing the at least one groove to form the at least one channel when the bodies are fixed together.

3. An apparatus according to claim 2, wherein the first body comprises a first member having a planar surface including said surface of the first body, and a second member having a planar surface, the planar surfaces of the members being connected together, the second member having an aperture therein which leads to said surface of the first body having said at least one groove formed therein, wherein when the first and second bodies are fixed together at least part of the second body fits within the aperture so as to allow said sealing between said surface of the first body and said surface of the second body.

4. An apparatus according to claim 3, wherein a further at least one groove is formed in the planar surface of the first member and connects with the first mentioned at least one groove, the further at least one groove being closed by the planar surface of the second member to form at least one passage.

5. An apparatus according to any one of claims 1 to 4, wherein the first body has an inlet and an outlet, the inlet and the outlet being connected by a flowpath comprising the at least one channel when the bodies are fixed together.

6. An apparatus according to claim 5, when claim 5 is dependent on claim 4, wherein the flowpath also comprises at least part of the at least one passage.

7. An apparatus according to claim 5 or claim 6, wherein the inlet comprises a first connector for connecting a tube to the flowpath and the outlet comprises a second connector for connecting a tube to the flowpath.

8. An apparatus for performing an assay involving binding between two chemical species, comprising, a first body having at least one groove formed therein, a second body having a surface that closes the at least one groove to form at least one channel, and a first chemical species bound so as to lie within the at least one channel, the apparatus being adapted for passage through the at least one channel of a fluid containing a second chemical species for binding between the first and second chemical species in the at least one channel.

9. An apparatus according to claim 8, wherein the second body is releasably fixable to the first body, said closure of the at least one groove occurring when the bodies are fixed together.

10. An apparatus according to claim 8, wherein the first and second bodies are permanently fixed together.

11. An apparatus according to any one of claims 8 to 10, wherein the at least one groove is formed in a planar surface of the first body, and wherein the surface of the second body is planar.

12. An apparatus according to any preceding claim, wherein the at least one channel comprises at least two channel parts lying mutually side by side.

13. An apparatus according to claim 12, wherein the at least two channel parts comprise at least four channel parts that are mutually side by side, the at least four channel parts being connected in series by alternating left and right hand curved channel portions.

14. An apparatus according to claim 12 or claim 13, wherein said channel parts are mutually parallel.

15. An apparatus according to any preceding claim, wherein the at least one channel has a maximum cross-sectional dimension of no more than 500 µm, preferably no more than 300 µm, and more preferably, no more than 200 µm.

16. An apparatus according to any preceding claim, further comprising a detector positioned for detecting chemiluminescence in said at least one channel.

17. An apparatus according to claim 16, wherein the detector is a photon multiplier tube.

18. An apparatus according to any preceding claim, wherein the second body is formed from polydimethylsiloxane (PDMS).

19. An apparatus according to any preceding claim, wherein the first chemical species is selected from the group consisting of proteins and ligands for proteins.

20. An apparatus according to claim 19, wherein the first chemical species is selected from the group consisting of antibodies and antigens.

21. A method of performing an assay involving binding between two chemical species comprising, providing an apparatus according to any preceding claim, introducing a sample containing a second chemical species into the at least one channel for binding between the first and second chemical species, and determining an amount of the second chemical species from the sample bound to the first chemical species.

22. A method according to claim 21, wherein said determination utilises measurement of chemiluminescence.

23. A method according to claim 21 or claim 22, further including the step, prior to said introduction, of mixing the sample with a fluid containing a predetermined amount of the second chemical species, the second chemical species in the fluid but not the second chemical species in the sample being linked to a label, said determination of said bound amount of said second chemical species from the sample comprising determination of an amount of the label bound to the first chemical species.

24. A method according to claim 23, wherein the label is a chemiluminescent label.

25. A method according to claim 24, including the steps of washing said mixture of said sample with said fluid from said at least one channel, and introducing into said at least one channel a reagent that triggers the chemiluminescent label to undergo chemiluminescence.

26. An apparatus comprising, first and second bodies, the first body having an aperture therein, the aperture leading to an inner surface of the first body, the inner surface having at least one groove formed therein, the second body having a surface, the first and second bodies being releasably fixable together with at least part of the second body fitting within the aperture so that the surface of the second body seals against the inner surface of the first body and closes the at least one groove to form at least one channel, the apparatus comprising an inlet and an outlet connected by a flowpath, the flowpath comprising the at least one channel.

27. An apparatus according to claim 26, wherein the inner surface of the first body and the surface of the second body are planar.

28. An apparatus according to claim 27, wherein the first body comprises first and second members, the first member having a planar surface including the inner surface, the second member having a planar surface connected to said planar surface of the first member, the aperture being formed in the second member.

29. An apparatus according to claim 28, wherein a further at least one groove is formed in the planar surface of the first member and connects with the first mentioned at least one groove, the further at least one groove being closed by the planar surface of the second member to form at least one passage, the flowpath including the at least one passage.

30. An apparatus according to any one of claims 26 to 29, wherein the inlet and the outlet are provided in the first body.

31. An apparatus according to claim 30, wherein the inlet and outlet comprise respective connectors for connecting tubes to the flow path.

32. An apparatus according to any one of claims 26 to 31, wherein the at least one channel comprises at least two channels parts lying mutually side by side.

33. An apparatus according to claim 32, wherein said at least two channel parts comprise at least four channel parts that are mutually side by side, the at least four channel parts being connected in series by alternating left and right hand curved channel portions.

34. An apparatus according to claim 32 or claim 33, wherein said channel parts are mutually parallel.

35. An apparatus according to any one of claims 26 to 34, wherein the at least one channel has a maximum cross-sectional dimension of no more than 500µm, preferably no more than 300 µm, and more preferably no more than 200 µm.

36. An apparatus according to any of claims 26 to 35, the apparatus further comprising a chemiluminescence detector for detecting chemiluminescence in said at least one channel.

37. An apparatus according to claim 36, wherein the chemiluminescence detector comprises a photon multiplier tube.

38. An apparatus according to any one of claims 26 to 37, wherein the second body is formed from polydimethylsiloxane (PDMS).

39. A method of performing an assay involving binding between two chemical species, comprising, providing a channel having a first chemical species bound therein, introducing a sample containing a second chemical species into the channel for binding between the first and second chemical species, determining an amount of the second chemical species from the sample bound to the first chemical species within the channel by using a chemiluminescence detector to detect chemiluminescence within the channel.

40. A method according to claim 39, wherein the channel has a maximum cross-sectional dimension of no more than 500µm, preferably no more than 300 µm, and more preferably no more than 200 µm.

41. A method according to claim 40, wherein the method further includes, prior to said introduction, mixing the sample with a fluid containing a predetermined amount of the second chemical species, the second chemical species in the fluid but not the second chemical species in the sample being linked to a chemiluminescent label, said determination of said bound amount of said second chemical species from said sample comprising determining an amount of said chemiluminescent label bound within said channel.

42. A method according to claim 41, wherein the method further comprises washing the mixture of the sample with the fluid from the channel, and introducing into the channel a reagent that triggers the label to undergo chemiluminescence.

43. An apparatus comprising, a first body having at least one groove formed therein, a second body having a surface that closes the at least one groove to form at least one channel, and a chemiluminescence detector positioned for detecting chemiluminescence in the at least one channel.

44. An apparatus according to claim 43, wherein the at least one channel has a maximum cross-sectional dimension of no more than 500 µm, preferably no more than 300 µm and more preferably no more than 200 µm.

45. An apparatus according to claim 43 or claim 44, wherein the second body is releasably fixable to the first body, said closure of the at least one groove occurring when the bodies are fixed together.

46. An apparatus according to claim 43 or claim 44, wherein the first and second bodies are permanently fixed together.

47. An apparatus according to any one of claims 43 to 46, wherein the at least one groove is formed in a planar surface of the first body, and wherein the surface of the second body is planar.

48. An apparatus according to any one of claims 43 to 47, wherein the at least one channel comprises at least two channel parts lying mutually side by side.

49. An apparatus according to claim 48, wherein the at least two channel parts comprise at least four channel parts that are mutually side by side, the at least four channel parts being connected in series by alternating left and right hand curved channel portions.

50. An apparatus according to claim 48 or claim 49, wherein said channel parts are mutually parallel.

51. A method of performing an assay involving binding between two chemical species comprising, providing an apparatus comprising a first body having at least one groove formed therein and a second body having a surface that closes the at least one groove to form at least one channel,
providing together in the at least one channel first and second chemical species capable of binding together, and
determining a measure of binding undergone between the first and second chemical species.

52. A method according to claim 51, wherein the at least one channel has a maximum cross-sectional dimension of no more than 500 µm, preferably no more than 300 µm and more preferably no more than 200 µm.

53. A method according to claim 51 or claim 52 wherein said determination involves measurement of chemiluminescence.
